# EUROPEAN PATENT APPLICATION

(11) **EP 3 581 077 A1**
(43) Date of publication of application: **18.12.2019**
(21) Application number: 18185925.7
(22) Date of filing: 27.07.2018
(51) Int. Cl.: A47J 37/07

(54) **MULTI-FUNCTIONAL OVEN**

(30) Priority: 13.06.2018 CN 201820917311 U
(71) Applicant: Mor Designs Ltd., Taipei 10547 (TW)
(72) Inventor: LIEN, Hung Mei, 10547 Taipei (TW)
(74) Representative: Haseltine Lake Kempner LLP

(57) **Abstract**

The present application discloses a multi-functional oven, including: a main oven body (1), an upper cover assembly (2) rotatably connected with the main oven body (1), a charcoal tray (3) having a plurality of through holes and arranged in the main oven body , a grill (4) disposed above the charcoal tray (3), a pellet stove assembly (5) cooperating with the charcoal tray (3), and a gas oven assembly matching with the charcoal tray (3); the pellet stove assembly (5) comprises a pellet burner (501) located below the charcoal tray (3) and a pellet feeding mechanism (502, 504) for conveying granular fuel to the pellet burner (501); the gas oven assembly comprises a gas burner (6) located below the charcoal tray (3), and a gas supply device matching with the gas burner. The present oven can perform charcoal oven mode, pellet stove mode or gas oven mode for barbecuing, therefore, the barbecue oven has a variety of grilling modes.

## Description

### TECHNICAL FIELD

The present application relates to the field of barbecue device, and particularly to a multi-functional oven.

### BACKGROUND

There are many types of ovens in the market at present, including charcoal ovens, gas ovens, pellet stoves, and the like. The above-mentioned ovens can only realize a single barbecue function. In order to experience the barbecue fun of different kinds of ovens, it is necessary to use each type of barbecue oven separately, which may increase the user's use cost, and meanwhile the plenty of barbecue ovens occupy a large space, therefore, it is not easy to carry and cannot satisfy the user's demand for barbecue.

### SUMMARY

An object of the present application is to provide a multi-functional oven in order to solve the technical problem in the prior art that the barbecue function is single.

In order to achieve this, the present application adopts the following technical solutions:
a multi-functional oven comprises: a main oven body, an upper cover assembly rotatably connected with the main oven body, a charcoal tray having a plurality of through holes are arranged in the main oven body , a grill is disposed above the charcoal tray, a pellet stove assembly cooperating with the charcoal tray, and a gas oven assembly matching with the charcoal tray; the pellet stove assembly comprises a pellet burner located below the charcoal tray and a pellet feeding mechanism for conveying granular fuel to the pellet burner; the gas oven assembly comprises a gas burner located below the charcoal tray, and a gas supply device matching with the gas burner.

Further, the upper cover assembly is provided with a rotating handle, a heat preservation holder is arranged in the upper cover assembly, and the heat preservation holder is rotatably connected with the upper cover assembly.

Further, the pellet feeding mechanism comprises a hopper, a cover board matching with the hopper, and a spiral feeding assembly disposed between the hopper and the pellet burner.

Further, the spiral feeding assembly comprises a spiral feeding shaft, a spiral blade disposed on the spiral feeding shaft, and a spiral feeding motor for driving the spiral feeding shaft to rotate.

Further, the main oven body is provided with a mounting frame and a lifting drive mechanism for driving the mounting frame to move; the charcoal tray is provided at the mounting frame.

Further, the lifting drive mechanism comprises a lifting frame connected with the mounting frame and having a rack structure, a lifting gear meshed with the rack structure, and a first lifting motor for driving the lifting gear to rotate.

Further, the lifting drive mechanism comprises a feed screw nut connected with the mounting frame, a feed screw matching with the feed screw nut, and a second lifting motor for driving the feed screw to rotate.

Further, the oven further comprises a frame assembly for installing the main oven body, and a universal wheel is arranged at the bottom of the frame assembly.

Further, an oil collection tray is arranged between the frame assembly and the main oven body.

Further, a plurality of perforations are opened at the bottom of the oil collection tray, and an oil guiding funnel is arranged directly below the perforation.

The present application has the following beneficial effects: when the charcoal oven mode is used, the charcoal blocks are placed on the charcoal tray to burn, and the heat generated by the charcoal blocks burns the material on the grill for barbecuing; when the pellet stove mode is used, the pellet stove assembly works, the charcoal tray is used as a radiation plate of the pellet stove assembly, the heat generated by the pellet burner is radiatively transmitted to the material placed on the grill through the charcoal tray for barbecuing, and the pellet feeding mechanism is used for conveying the granular fuel to the pellet burner; when the gas oven mode is used, the gas oven assembly works, the charcoal tray is used as a radiation plate of the gas oven assembly, the gas supply device provides fuel gas to the gas burner, and the fuel gas reaching the gas burner burns to generate a flame, and through the radiation of the charcoal tray, the generated heat is transferred to the materials placed on the grill for barbecuing. Thus, the barbecue oven has a variety of grilling modes.

### BRIEF DESCRIPTION OF THE DRAWINGS

In order to make the technical solutions in the embodiments of the present application clearer, the accompanying drawings to be used in the embodiments and the description of the prior art will be briefly introduced below, it is apparent that the drawings in the following description are merely some embodiments of the present application and that other drawings may be obtained by those skilled in the field without departing from the inventive nature of the application.
FIG. 1 is an exploded view of a multi-functional oven in the embodiment of the present application;
FIG. 2 is an overall view of a multi-functional oven in the embodiment of the present application;
FIG. 3 is a schematic structural view of an upper cover assembly according to an embodiment of the present application;
FIG. 4 is a schematic structural view of a lifting drive mechanism in an embodiment of the present application;
FIG. 5 is a schematic structural view of an oil collection tray according to an embodiment of the present application;
FIG. 6 is a first cross-sectional view of a multi-functional oven of the embodiment of the present application;
FIG. 7 is a second cross-sectional view of a multi-functional oven of the embodiment of the present application;
FIG. 8 is a front view of a multi-functional oven in an embodiment of the present application;
in the drawings, the following reference numerals are used:
1, main oven body;
2, upper cover assembly; 21, rotating handle; 22, heat preservation holder;
3, charcoal tray;
4, grill;
5, pellet stove assembly; 501, pellet burner; 502, hopper; 503, cover board; 504, spiral feeding assembly;
6, gas burner;
7, mounting frame;
8, lifting drive mechanism; 801, lifting frame; 8011, rack structure; 802, lifting gear; 803, first lifting motor;
9, frame assembly;
10, oil collection tray; 1001, perforation;
11, oil guiding funnel; and
12, control panel cover.

### DETAILED DESCRIPTION OF THE EMBODIMENTS

In order to make the technical problems to be solved, technical solutions, and beneficial effects of the present application clearer and more understandable, the present application will be further described in detail herein after with reference to the accompanying drawings and embodiments. It should be understood that the embodiments described herein are only intended to illustrate but not to limit the present application.

It is noted that when a component is referred to as being "fixed to" or "disposed on" another component, it can be directly or indirectly on another component. When a component is referred to as being "connected to" another component, it can be directly or indirectly connected to another component.

It should be understood that, "length", "width", "upper", "lower", "front", "back", "left" and "right", "vertical", "horizontal", "top", "bottom", "inside", "outside" and other terms indicating the orientation or positional relationship are based on orientation or positional relationship shown in the drawings, and are only for the purpose of facilitating the description of the application and simplifying the description, instead of indicating or implying that the indicated device or component must have a specific orientation and constructed and operated in a particular orientation, and therefore it cannot be construed as limitation of the application.

In addition, the terms "first" and "second" are for illustrative purposes only and should not be construed as indicating or implying a relative importance or implicitly indicating the quantity of technical features indicated. Therefore, a feature that defines "first" and "second" may expressly or implicitly include one or more of the features. In the description of the present application, "multiple" means two or more than two, unless otherwise specifically defined.

The following describes the implementation of the present application in detail with reference to specific embodiments.

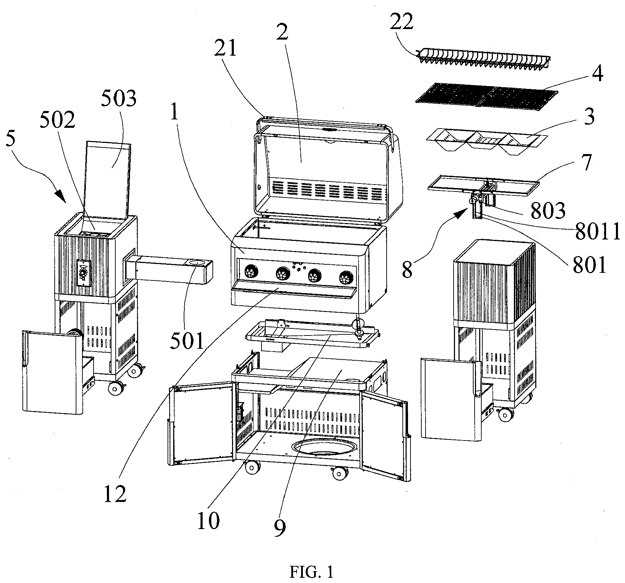

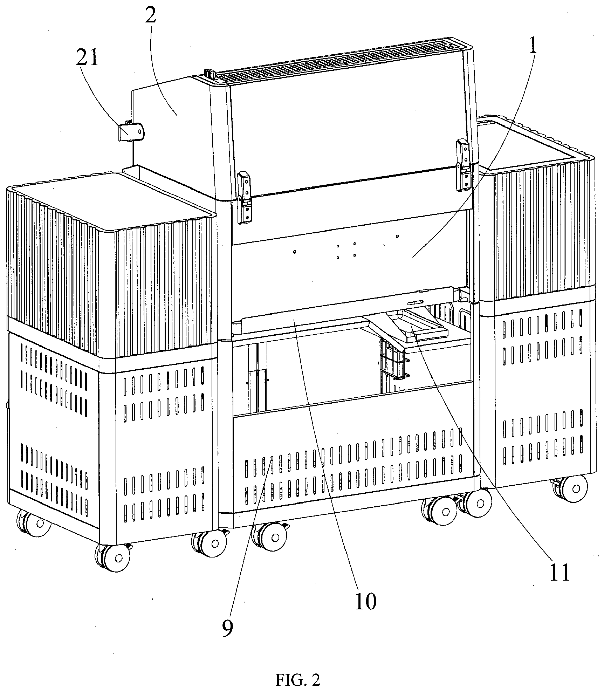

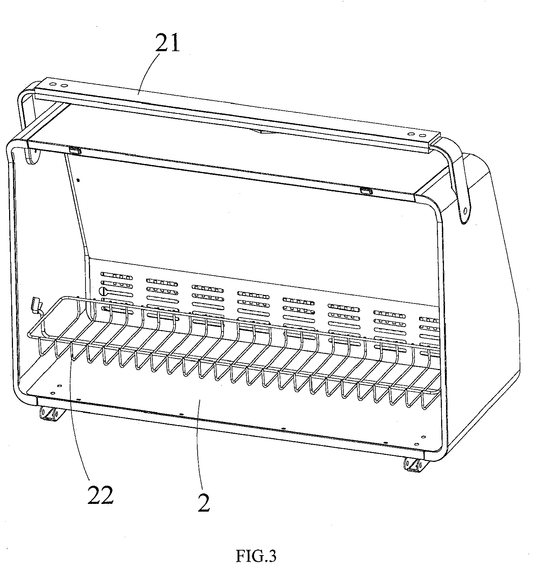

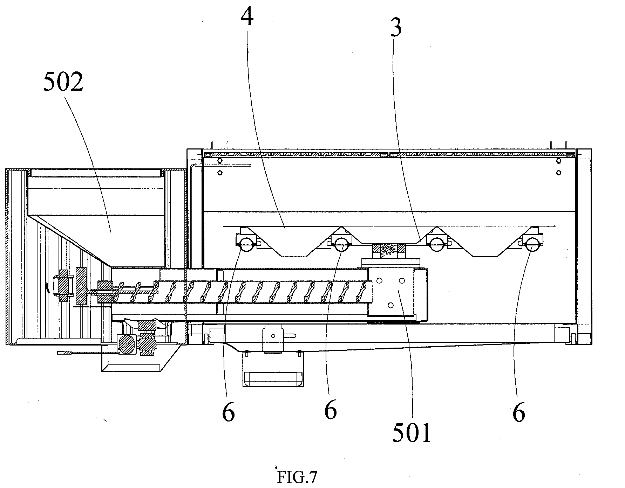

As shown in FIG. 1 to FIG. 8, the present application provides a multi-functional oven according to an embodiment, comprising: a main oven body 1 and an upper cover assembly 2 rotatably connected to the main oven body 1, a charcoal tray 3 having a plurality of through holes are arranged in the main oven body 1, a grill 4 disposed above the charcoal tray 3, a pellet stove assembly 5 cooperating with the charcoal tray 3, and a gas oven assembly matching with the charcoal tray 3; the pellet stove assembly 5 comprises a pellet burner 501 located below the charcoal tray 3 and a pellet feeding mechanism for conveying granular fuel to the pellet burner 501; the gas oven assembly comprises a gas burner 6 located below the charcoal tray 3, and a gas supply device matching with the gas burner 6.

In the embodiment of the present application, the main oven body 1 serves as a barbecue space, and the material to be barbecued is placed on the grill 4; when the charcoal oven mode is used, the charcoal blocks are placed on the charcoal tray 3 to burn, and the heat generated by the charcoal blocks burns the material on the grill 4 for barbecuing; when the pellet stove mode is used, the pellet stove assembly 5 works, the charcoal tray 3 is used as a radiation plate of the pellet stove assembly 5 , the heat generated by the pellet burner 501 is radiatively transmitted to the material placed on the grill 4 through the charcoal tray 3 for barbecuing, and the pellet feeding mechanism is used for conveying the granular fuel to the pellet burner; when the gas oven mode is used, the gas oven assembly works, the charcoal tray 3 is used as a radiation plate of the gas oven assembly, the gas supply device provides fuel gas to the gas burner 6, and the fuel gas reaching the gas burner 6 burns to generate a flame, and through the radiation of the charcoal tray 3, the generated heat is transferred to the materials placed on the grill 4 for barbecuing; thus, the barbecue oven has a variety of grilling modes. The gas supply device is an essential structure of a gas oven in the prior art, including an air source and a gas supply pipe.

In the embodiment of the present application, the charcoal tray 3 has a V-shaped structure therein, so that the heat transfer effect of the charcoal tray 3 acting as a radiation plate is better.

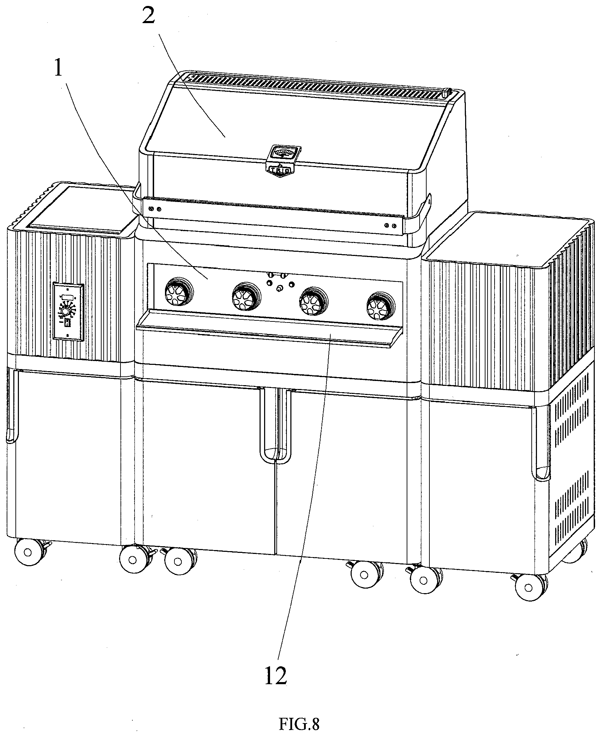

In the embodiment of the present application, please refer to FIG. 1 and FIG. 8, the main oven body 1 is provided with a control panel cover 12 rotatably connected with the main oven body 1, and the control panel cover 12 is used for covering control buttons on the main oven body 1 to improve the overall performance and aesthetics of the multi-functional oven.

Further, please refer to FIG. 1 , as a specific embodiment of the multi-functional oven provided by the present application, the upper cover assembly 2 is provided with a rotating handle 21, and the upper cover assembly 2 is internally provided with a heat preservation holder 22, and the heat preservation holder 22 is rotatably connected with the upper cover assembly 2. Specifically, the upper cover assembly 2 is used to cover the main oven body 1, to increase the efficiency of barbecuing; the rotating handle 21 facilitates to open the upper cover assembly 2, and to take the material from the main oven body 1 or place the material into the main oven body 1; the heat preservation holder 22 is used for placing the barbecued, due that the heat preservation holder 22 is rotatably connected with the upper cover assembly 2, the heat preservation holder 22 always remains horizontal due to its own gravity, and the heat preservation holder 22 still maintains a horizontal state when the upper cover assembly 2 rotates, therefore the material on the heat preservation holder 22 will not fall out because of the rotation of the upper cover assembly 2.

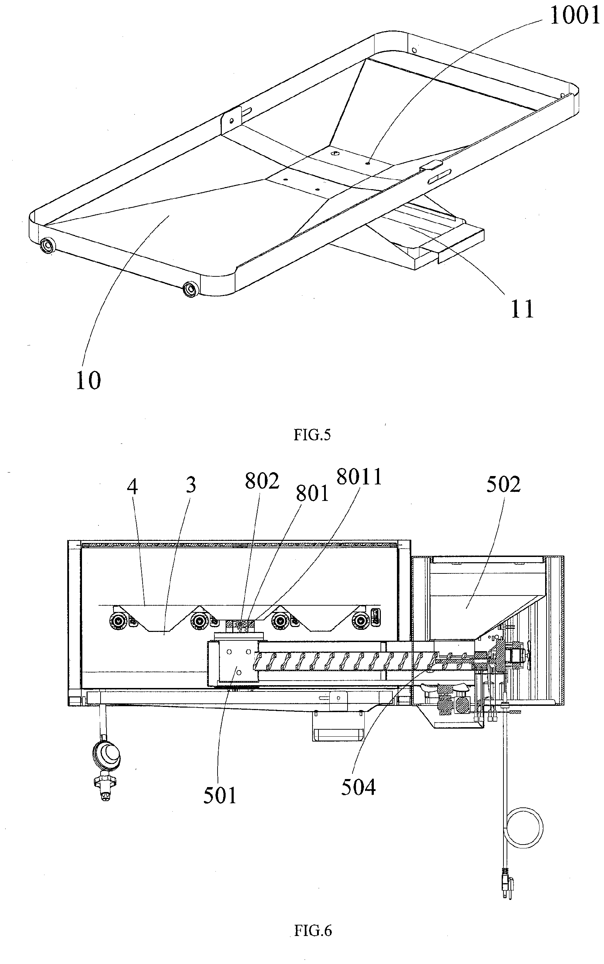

Further, please refer to FIG. 1 and FIG. 6, as a specific embodiment of the multi-functional oven provided by the present application, the pellet feeding mechanism comprises a hopper 502, a cover board 503 matching with the hopper 502, and the spiral feeding assembly disposed between the hopper 502 and the pellet burner 501. Specifically, the pellet fuel is placed inside the hopper 502, and a spiral feeding assembly 504 works to convey the pellet fuel inside the hopper 502 into the pellet burner 501 for burning.

Further, please refer to FIG. 1 and FIG. 6 , as a specific embodiment manner of the multi-functional oven provided by the present application, the spiral feeding assembly 504 includes a spiral feeding shaft, a spiral blade disposed on the spiral feeding shaft, and a spiral feeding motor for driving the spiral feeding shaft to rotate. Specifically, the spiral feeding motor drives the spiral feeding shaft to rotate, thereby realizing the rotation of the spiral blade disposed on the spiral feeding shaft to move the pellet fuel from the hopper 502 to the pellet burner 501.

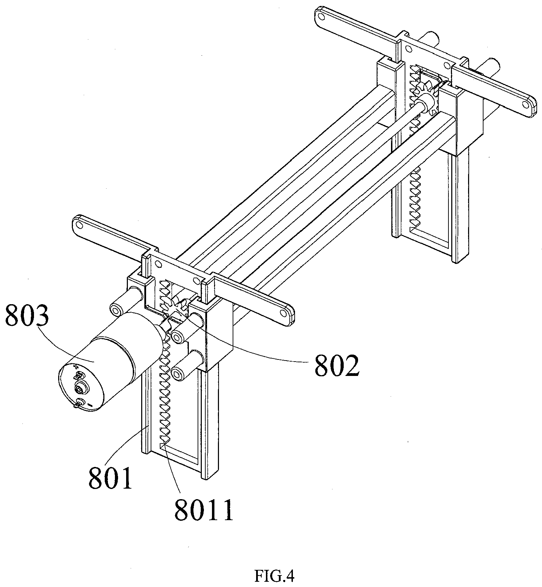

Further, please refer to FIG. 1 and FIG. 4 , as a specific embodiment of the multi-functional oven provided by the present application, the main oven body 1 is provided with a mounting frame 7 and a lifting drive mechanism 8 for driving the mounting frame 7 to move; the charcoal tray 3 is provided at the mounting frame 7. Specifically, the mounting frame 7 is used to mount the charcoal tray 3, and the lifting drive mechanism 8 is used to drive the mounting frame 7 to move up and down along the inner wall of the main oven body 1, so as to drive the charcoal tray 3 mounted on the mounting frame 7 along the inner wall of the main oven body 1 to move up and down, the charcoal tray 3 can indirectly change the amount of heat received by the grill 4 when moving up and down along the inner wall of the main oven body 1 .

Further, please refer to FIG. 1 and FIG. 4, as a specific embodiment of the multi-functional oven provided by the present application, the lifting drive mechanism 8 comprises a lifting frame 801 connected with the mounting frame 7 and having a rack structure 8011, a lifting gear 802 meshed with the rack structure 8011, and a first lifting motor 803 for driving the lifting gear 802 to rotate. Specifically, the lifting drive mechanism 8 drives the mounting frame 7 to move up and down as follows: the first lifting motor 803 drives the lifting gear 802 to rotate, and the lifting gear 802 rotates to interact with the rack structure 8011, so that it is realized that the lifting gear 802 rotates to drive the lifting frame 801 moving up and down, that is, the up and down movement of the mounting frame 7 connected to the lifting frame 801 is achieved.

Further, as a specific embodiment of the multi-functional oven provided by the present application, the lifting drive mechanism 8 comprises a feed screw nut connected with the mounting frame 7, a feed screw matching with the feed screw nut, and a second lifting motor (not shown in the drawings) for driving the feed screw to rotate. Specifically, the lifting drive mechanism 8 drives the mounting frame 7 to move up and down as follows: the second lifting motor drives the feed screw to rotate, and the feed screw nut matching with the feed screw rotates in the direction of the axis along the feed screw, the mounting frame 7 connected to the feed screw nut moves as the screw nut moves.

Further, please refer to FIG. 1, as a specific embodiment manner of the multi-functional oven provided by the present application, the oven further comprises a frame assembly 9 for installing the main oven body 1, and a universal wheel is arranged at the bottom of the frame assembly 9. Specifically, the main oven body 1 is placed on the frame assembly 9, the frame assembly 9 is provided with a universal wheel for easy movement, that is, the frame assembly 9 can facilitate the movement of the main oven body 1.

Further, please refer to FIG. 1 and FIG. 5, as an embodiment of the multi-functional oven provided by the present application, an oil collection tray 10 is arranged between the frame assembly 9 and the main oven body 1. Specifically, the oil produced by barbecuing in the main oven body 1 drops from the main oven body 1 to the oil collection tray 10 and collected by the oil collection tray 10 .

Further, please refer to FIG. 5, as a specific embodiment manner of the multi-functional oven provided by the present application, a plurality of perforations 1001 are opened at the bottom of the oil collection tray 10, and an oil guiding funnel 11 is arranged directly below the perforation 1001. Specifically, when using the charcoal oven mode or the pellet stove mode, the ash resulting from the combustion of the fuel also falls with the oil onto the oil collection tray 10, at which time the oil is dripped into the oil guiding funnel 11 by the perforation 1001 and discharged, thus achieving the separation of ash and oil.

It's obvious that the aforementioned embodiments are only preferred embodiments of the present application, and are not intended to limit the present application. Any modification, equivalent replacement, improvement, and so on, which are made within the spirit and the principle of the present application, should be comprised in the scope of the present application.

## Claims

1. A multi-functional oven, comprising: a main oven body, an upper cover assembly rotatably connected with the main oven body, a charcoal tray having a plurality of through holes and arranged in the main oven body , a grill disposed above the charcoal tray, a pellet stove assembly cooperating with the charcoal tray, and a gas oven assembly matching with the charcoal tray; the pellet stove assembly comprises a pellet burner located below the charcoal tray and a pellet feeding mechanism for conveying granular fuel to the pellet burner; the gas oven assembly comprises a gas burner located below the charcoal tray, and a gas supply device matching with the gas burner.

2. The multi-functional oven of claim 1, wherein the upper cover assembly is provided with a rotating handle, a heat preservation holder is arranged in the upper cover assembly, and the heat preservation holder is rotatably connected with the upper cover assembly.

3. The multi-functional oven of claim 1, wherein the pellet feeding mechanism comprises a hopper, a cover plate matching with the hopper, and a spiral feeding assembly disposed between the hopper and the pellet burner.

4. The multi-functional oven of claim 3, wherein the spiral feeding assembly comprises a spiral feeding shaft, a spiral blade disposed on the spiral feeding shaft, and a spiral feeding motor for driving the spiral feeding shaft to rotate

5. The multi-functional oven of claim 1, wherein the main oven body is provided with a mounting frame and a lifting drive mechanism for driving the mounting frame to move; the charcoal tray is arranged at the mounting frame.

6. The multi-functional oven of claim 5, wherein the lifting drive mechanism comprises a lifting frame connected with the mounting frame and having a rack structure, a lifting gear meshing with the rack structure, and a first lifting motor for driving the lifting gear to rotate.

7. The multi-functional oven of claim 5, wherein the lifting drive mechanism comprises a feed screw nut connected with the mounting frame, a feed screw cooperating with the feed screw nut, and a second lifting motor for driving the feed screw to rotate.

8. The multi-functional oven of any one of claims 1-7, wherein the oven further comprises a frame assembly for installing the main oven body, and a universal wheel is arranged at the bottom of the frame assembly.

9. The multi-functional oven of claim 8, wherein an oil collection tray is arranged between the frame assembly and the main oven body.

10. The multi-functional oven of claim 9, wherein a plurality of perforations are opened at the bottom of the oil collection tray, and an oil guiding funnel is arranged directly below the perforation.
